# EUROPÄISCHE PATENTSCHRIFT

(11) **EP 2 885 510 B1**
(45) Veröffentlichungstag und Bekanntmachung des Hinweises auf die Patenterteilung: **28.09.2016**
(21) Anmeldenummer: 13774110.4
(22) Anmeldetag: 01.10.2013
(51) Int. Cl.: F01D 21/00, G01H 1/00

(54) **MESSVERFAHREN ZUR SCHADENSERKENNUNG AN EINER TURBINENSCHAUFEL UND TURBINE**
MEASURING METHOD FOR DETECTING DAMAGE TO A TURBINE BLADE AND TURBINE
PROCÉDÉ DE MESURE DESTINÉ À DÉTECTER LES DOMMAGES SUR UNE AUBE DE TURBINE ET TURBINE

(30) Priorität: 31.10.2012 EP 12190744
(43) Veröffentlichungstag der Anmeldung: 24.06.2015
(73) Patentinhaber: Siemens Aktiengesellschaft, 80333 München (DE)
(72) Erfinder: JAKIELSKI, Sebastian, 46238 Bottrop (DE); OBERMAYR, Stefan, 45475 Mülheim (DE)
(86) Internationale Anmeldenummer: PCT/EP2013/070433
(87) Internationale Veröffentlichungsnummer: WO 2014/067737

(56) Entgegenhaltungen:
- EP-A1- 1 538 448
- EP-A1- 2 312 410
- DE-A1-102008 057 556
- US-A- 4 934 192
- US-A- 4 951 500
- US-A1- 2004 060 371
- US-A1- 2010 127 694
- US-B1- 7 023 205

## Beschreibung

Die vorliegende Erfindung betrifft ein Messverfahren zur Früherkennung eines Schadens an einer Schaufel eines Schaufelrads einer Turbine sowie eine Turbine.

Es ist bekannt, Schaufeln einer Turbine mittels Wirbelstromprüfung auf Schäden zu untersuchen. Dabei werden die Sonden direkt auf dem Werkstück verfahren um kleinste Risse zu detektieren.

Eine derartige Untersuchung ist aufgrund des direkten Kontakts zwischen den Sonden und der Schaufel nicht während eines Betriebs der Turbine möglich. Während des Betriebs auftretende Schäden können somit frühestens im darauffolgenden Prüfintervall nach Beendigung des Betriebs festgestellt werden. Die Dokumente EP2312410 A1, US2010127694 A1 und DE102008057556 A1 offenbaren Messverfahren zur Schadenserkennung nach dem Stand der Technik.

Der vorliegenden Erfindung liegt die Aufgabe zugrunde, ein verbessertes Messverfahren sowie eine Turbine, welche derart ausgebildet ist dieses Messverfahren durchzuführen, bereitzustellen.

Gelöst wird diese Aufgabe mit einem Verfahren nach Anspruch 1 sowie einer Turbine nach Anspruch 6. Vorteilhafte Weiterbildungen der Erfindung sind in den Unteransprüchen angegeben und in der Beschreibung beschrieben.

In dem erfindungsgemäßen Messverfahren zur Früherkennung eines Schadens an einer Schaufel eines Schaufelrads einer Turbine werden während eines Betriebs der Turbine in einer Rotationsrichtung der Schaufel entlang eines das Schaufelrad umgebenden Umfangs an mehreren Stellen jeweils mehrere Magnetfelder im Wesentlichen in einer Schwingungsrichtung der Schaufel nebeneinander erzeugt, die von einer Spitze eines Schaufelblatts der Schaufel beim Durchqueren beeinflusst werden. Durch die Beeinflussung an den mehreren Stellen werden Positionswerte der Spitze erfasst. Aus den Positionswerten wird dann ein Positionsverlauf des Schaufelblatts gebildet und aus dem Positionsverlauf eine Frequenz ermittelt. Diese Frequenz wird mit bestimmten Frequenzwerten verglichen. Bei einer plötzlichen und/oder starken Änderung der Frequenz wird ein Alarmereignis erkannt.

Die Messflächen weisen jeweils mehrere Reihen von nebeneinander angeordneten Sonden auf. Insbesondere sind die mehreren Reihen dabei zueinander in einer Richtung angeordnet, die senkrecht zu der Schwingungsrichtung der Schaufel verläuft.

Damit kann zur Erfassung der Position auf redundante Daten zurückgegriffen werden. Die Positionserfassung der Spitzen der Schaufelblätter kann dadurch sicherer durchgeführt werden.

Das vorgestellte Messverfahren zeigt eine Möglichkeit auf, wie während des Betriebs, insbesondere einer Dampfturbine, an den freistehenden Endschaufeln eine permanente Echtzeit-Schwingungsmessung implementiert werden kann und bietet einen effektiven Schutz vor Turbinenschäden.

Es ist vorteilhaft möglich, bei Voranschreiten eines Risses im Schaufelfuß, jedoch noch deutlich vor einem Abriss des Schaufelblatts, eine Frequenzänderung an der betreffenden Schaufel festzustellen und daraufhin frühzeitig die Turbine abzuschalten um effektiv größere Schäden zu verhindern.

Die dargestellte Lösung umfasst sowohl eine Messung an allen leitfähigen als auch an permeablen Schaufeln. Auch Schaufeln aus Titan oder Aluminium sind überprüfbar. Eine flüchtige Magnetisierung der Schaufel ist nicht erforderlich.

Zudem können gleichzeitig Auswirkungen von veränderlichen Betriebsparametern auf die Schaufeln erfasst und dargestellt werden.

Darüber hinaus trägt das erfindungsgemäße Verfahren in seiner Anwendung zu einem höheren Vertrauen in die Turbinentechnik bei.

In einer vorteilhaften Ausführung des erfindungsgemäßen Messverfahrens werden die Positionswerte in eine Sinuskurve als Positionsverlauf überführt.

Damit ist eine die Wellenlänge beziehungsweise die Frequenz des Positionsverlaufs leicht zu bestimmen. Die Werte für die zu überprüfende Frequenz können schnell ermittelt werden.

In einer weiteren vorteilhaften Ausführung des erfindungsgemäßen Messverfahrens werden die Schaufeln zyklisch nacheinander überprüft.

Damit werden auf einfache Weise alle Schaufeln eines Schaufelrads regelmäßig einer Überprüfung unterzogen. Der Zyklus ist dabei so kurz, dass zwischen zwei Prüfungen kein Versagen einer Schaufel auftreten kann.

In einer weiteren vorteilhaften Ausführung des erfindungsgemäßen Messverfahrens werden die bestimmten Frequenzwerte aus den bereits ermittelten Frequenzen der Schaufel bestimmt.

Damit werden unterschiedliche Schwingungseigenschaften der einzelnen Schaufeln beim Erkennen eines Alarmereignisses mit berücksichtigt. Das Messverfahren wird dadurch genauer. Fehlmeldungen können damit vermieden werden.

In einer weiteren vorteilhaften Ausführung des erfindungsgemäßen Messverfahrens werden die bestimmten Frequenzen aus einem vordefinierten Frequenzbereich bestimmt.

Damit stehen schon vor einer ersten Inbetriebnahme der Turbine Werte zum Abgleich zur Verfügung. Die Einsatzsituationen des Messverfahrens werden damit erweitert.

Die erfindungsgemäße Turbine mit einem Diffusor und einem im Diffusor angeordneten und mehrere Schaufeln aufweisenden Schaufelrad umfasst erfindungsgemäß in einer Rotationsrichtung der Schaufeln entlang eines das Schaufelrad umgebenden Umfangs an mehreren Stellen Messflächen. Diese Messflächen weisen jeweils zumindest eine Erregerspule und mehrere im Wesentlichen in einer Schwingungsrichtung der Schaufel nebeneinander angeordnete Sonden auf, die in mehreren Reihen nebeneinander angeordnet sind und die mit einer Auswerteeinheit verbindbar sind. Die Sonden sind insbesondere Wirbelstromsonden. Und die erfindungsgemäße Turbine ist insbesondere eine Dampfturbine.

Vorteilhaft ist damit eine Turbine zur Ausführung des erfindungsgemäßen Messverfahrens bereitgestellt. Die erfindungsgemäße Turbine weist eine erhöhte Betriebssicherheit auf. Unfälle durch Schäden an den Schaufeln können vermieden werden. Damit sind die Turbine selbst und ihre Umgebung geschützt.

Die Sonden stehen dabei nicht hervor und beeinflussen nicht den Strömungsfluss. Es wird eine robuste und langlebige Vorrichtung mit einem hohem Auflösungsvermögen und der Möglichkeit der permanenten Online-Überwachung bereitgestellt.

In einer vorteilhaften Ausgestaltung der erfindungsgemäßen Turbine sind die Messflächen gleichmäßig über den gesamten Umfang verteilt angeordnet.

Damit können Daten über das Schwingungsverhalten der Schaufeln über den gesamten Umfang ermittelt werden. Es stehen mehr Daten zur Auswertung zur Verfügung. Bei Messungen am gesamten Umfang können zudem bei sich nicht in einer vertikalen Achse drehenden Schaufelrädern Auswirkungen der Schwerkraft auf das Schwingungsverhalten einzelner Schaufeln ergründet werden.

In einer weiteren vorteilhaften Ausgestaltung der erfindungsgemäßen Turbine weist diese eine Wasserkühlung an den Messflächen auf.

Damit ist eine effektive Kühlung der Messflächen ermöglicht, die die Messflächen in eine günstigere Betriebstemperatur versetzen und damit die Funktionsdauer der Messflächen erhöhen kann.

Beispielhafte Ausführungen der Erfindung werden anhand der Zeichnungen und der nachfolgenden Beschreibung näher erläutert. Es zeigen:
- Figur 1: eine Messfläche einer erfinderischen Turbine,
- Figur 2: eine Anordnung mehrerer Messflächen in der Turbine,
- Figur 3: die Messflächen über einem Schaufelblatt der Turbine,
- Figur 4: einen Positionsverlauf eines Schaufelblatts,
- Figur 5: Frequenzverläufe zweier Schaufelblätter und
- Figur 6: ein erfinderisches Messverfahren.

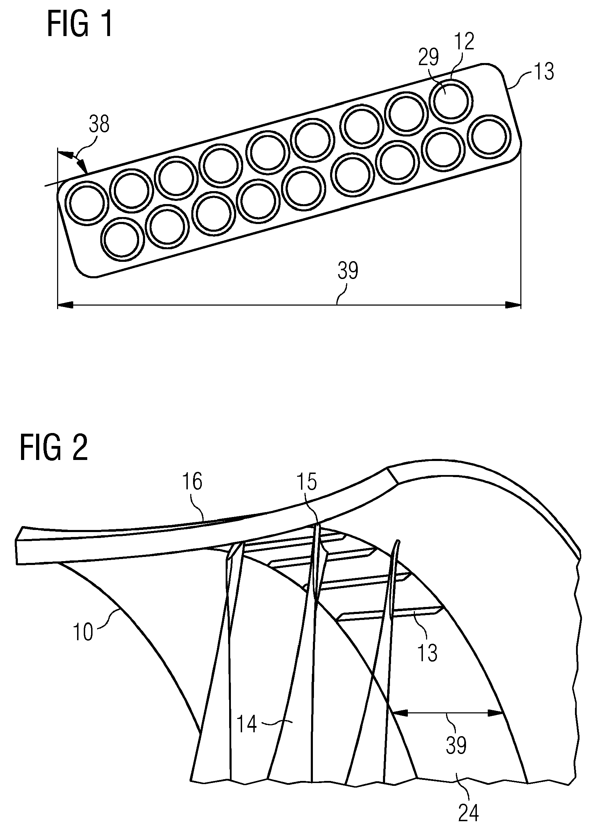

In der Figur 1 ist in einer Skizze beispielhaft eine Messfläche 13 einer erfinderischen Turbine 10 gezeigt. Die Messfläche 13 umfasst mehrere nebeneinander angeordnete Sonden 12, die in mehreren Reihen angeordnet sind. In den Sonden 12 sind Erregerspulen 29 zum Erzeugen jeweils eines veränderlichen Magnetfelds integriert. Die Sonde 12 ist insbesondere eine zum Detektieren von Wirbelströmen.

Die abgebildete Messfläche 13 umfasst achtzehn Sonden 12. Erfindungsgemäß kann die Anzahl der Sonden 12 in einer Messfläche 13 auch mehr oder weniger als achtzehn betragen.

Die Messfläche 13 weist je nach Schaufeltyp eine Messbreite 39 auf, die über die Breite der Schwingungsamplitude plus Schaufelblattbreite hinausgeht. Eine Schrägstellung 38 der Messfläche 13 wird in Abhängigkeit einer Schwingungsrichtung 18 der Schaufel ausgelegt. Der Abstand der einzelnen Sonden 12 zueinander wird ebenfalls in Abhängigkeit der Schwingungsamplitude ausgelegt. Auch die Form des Diffusors 16, in dem die Messfläche 13 angeordnet werden soll, wird mit berücksichtigt.

Als Erregerspulen 29 sind relativ kleine Exemplare vorgesehen, beispielsweise mit einem Durchmesser von 0,5 mm bis 2 mm, um eine im Magnetfeld befindliche, permeable oder elektrisch leitfähige Schaufel 26 zu detektieren.

Bei der hier beschriebenen Erfindung wird die Eigenschaft verwendet, dass sich das sogenannte "Lift Off Signal" auf der Impedanzebene bewegt, wenn sich ein leitfähiges oder permeables Prüfobjekt im Wirkbereich des Magnetfeldes befindet.

Je nach Frequenz, ca. 20Hz bis 2MHz, und Durchmesser der Erregerspulen 29 kann die Schaufel 26 als Prüfobjekt noch einige mm von den Sonden 12 entfernt detektiert werden. Dieser Abstand kann durch bekannte Techniken, wie beispielsweise magnetische Schirmung und Ferritkern, noch vergrößert werden.

In der Figur 2 ist in einer Skizze beispielhaft eine Anordnung mehrerer Messflächen 13 in einem Diffusor 16 einer erfindungsgemäßen Turbine 10 dargestellt.

Die Messflächen 13 sind fest im Diffusor 16, direkt über Spitzen 15 von Schaufelblättern 14 der Schaufeln 26 angeordnet. Die Messflächen 13 sind insbesondere in gleichmäßigen Abständen in einem Umfang 24 des Diffusors 16 positioniert, der eine die Schaufeln 26 umgebende Innenseite des Diffusors 16 bildet.

Die Messflächen 13 weisen dabei eine Messbreite 39 auf, die größer ist als eine Dicke der Schaufelblätter 14 plus ihrer axialen Schwingungsamplitude. So ist es möglich eine axiale Lagebestimmung der Spitze mit einer Genauigkeit von etwa 0,5 mm bis 1 mm vorzunehmen.

Um eine Frequenz 22 des Schaufelblatts 14 messen zu können, ist es nötig mehrere der Messflächen 13 am Umfang 24 verteilt anzuordnen. Diese werden im Messverfahren 11 drehzahlsynchron hintereinander angesteuert.

Der Abstand zwischen den einzelnen Messflächen 13 ist abhängig von der Frequenz der Erregerspule 29, der Länge des Umfangs 24 sowie von der Eigenschwingung der Schaufel 26. Eine Beispielrechnung zeigt für eine Erregerfrequenz von 25 Hz, einen Umfang von 21 m und eine Eigenschwingung der Schaufel 26 von 150 Hz bei 5 Messpunkten einen Abstand von 0,7 m pro Messfläche 13:
25Hz * 21m = 525 m/s
525 m/s / 150 Hz = 3,5 m Wellenlänge
3,5m / 5 Messpunkte = 0,7m Abstand

Die erfindungsgemäße Turbine 10 weist für die einzelnen Messflächen 13 Durchgangstaschen im Diffusor 16 auf. Diese Durchgangstaschen können auch nachträglich eingebracht werden, wenn eine Turbine mit Messflächen 13 nachgerüstet werden soll. Zudem weist die erfindungsgemäße Turbine 10 Datenleitungen auf, die die Sonden 12 mit einer Auswerteeinheit verbinden.

Optional kann die erfindungsgemäße Turbine 10 eine Wasserkühlung aufweisen, mit der die Erregerspulen 29 effektiv gekühlt werden können. So kann eine lange Lebensdauer der Erregerspulen 29 erreicht werden.

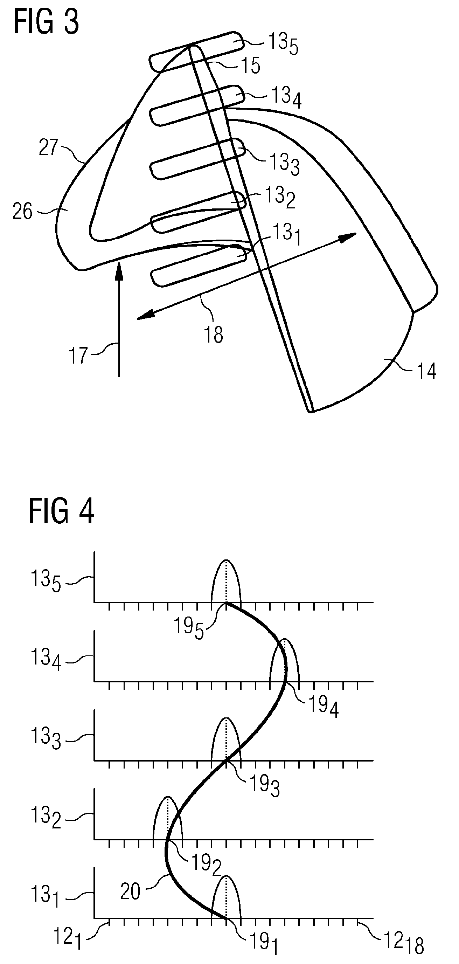

Die Figur 3 zeigt in einer Skizze beispielhaft die Anordnung mehrerer Messflächen 13 über einer Schaufel 26 in einer Draufsicht. Der Diffusor 16 ist in dieser Darstellung ausgeblendet.

Das auf einem Schaufelfuß 27 angeordnete Schaufelblatt 14 bewegt sich im Betrieb der Turbine 10 in Rotationsrichtung 17 und schwingt dabei in einer Schwingungsrichtung 18.

Entlang der Rotationsrichtung 17 sind hier beispielhaft die Messflächen 13₁ bis 13₅ dargestellt. Die Messflächen 13 sind parallel zur Schwingungsrichtung 18 angeordnet. Sie weisen die gleiche Schrägstellung 38 gegenüber einer Drehachse des Schaufelrads auf wie die Schwingungsrichtung 18. Ihre Messbreite 39 ragt über die Breite der Schwingungsamplitude plus Schaufelblattbreite hinaus.

Bei einer Drehung des Schaufelrads der Turbine 10 durchquert das Schaufelblatt 14 mit seiner Spitze 15 nacheinander die verschiedenen Messflächen 13₁ bis 13₅. In der Figur 3 durchquert die Spitze 15 gerade die Messfläche 13₅. Durch die Schwingung des Schaufelblatts 14 durchquert die Spitze 15 die verschiedenen Messflächen 13 an unterschiedlichen Stellen der Messbreite 39. Das wird durch die Sonden 12 der Messflächen 13 an diesen Stellen erfasst 32, woraus sich hier im Beispiel fünf Positionswerte 19 für die Spitze 15 der Schaufel 26 ergeben.

Die Messflächen 13₁ bis 13₅ werden insbesondere drehzahlsynchron zum Schaufelrad hintereinander angesteuert um von jeweils einer bestimmten Schaufel 26 die umfangsabhängige Positionsänderung der Spitze 15, beispielsweise an der Dampfeintrittskante zu ermitteln.

Die Umfangsposition muss an einer beliebigen Stelle des Läufers abgenommen werden um positionsgenau die Schaufeln stroboskopartig messen zu können.

Aus den fünf Positionswerten 19 der Schaufel 26 an den fünf Messflächen 13₁ bis 13₅ wird von einer Auswerteeinheit ein Positionsverlauf 20 gebildet 33. Ein solcher Positionsverlauf 20 ist beispielhaft in der Figur 4 dargestellt.

Dabei werden die Positionswerte 19₁ bis 19₅ für die fünf verschiedenen Messflächen 13₁ bis 13₅ der Reihe nach abgebildet. Die Positionswerte 19₁ bis 19₅ werden hier beispielhaft von achtzehn Sonden 12₁ bis 12₁₈ je Messfläche 13 erfasst 32. Die Positionswerte 19₁ bis 19₅ werden von der Auswerteeinheit insbesondere in eine Sinusfunktion umgewandelt. Aus dieser wird eine Wellenlänge der Schwingung und daraus mathematisch eine Frequenz 22 für die Schaufel 26 ermittelt 34. Das Messergebnis wird dabei mit zunehmender Dichte an Messpunkten genauer.

Die Frequenz 22 jeder Schaufel 26 wird auf diese Weise nacheinander zyklisch überwacht. Bei großen Rissen im Schaufelfuß 27 verändert sich die Frequenz 22 der Schaufel um einige Hz, was sich über die erfindungsgemäße Technik leicht abbilden lässt. Dazu werden die ermittelten Frequenzen 22 über eine Zeit 21 beobachtet.

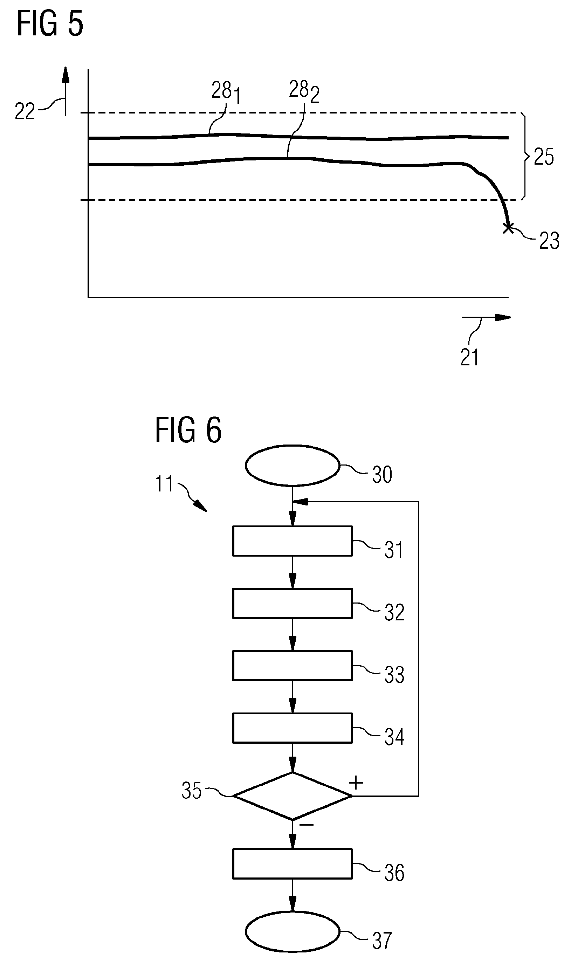

Die Figur 5 zeigt beispielhaft die über die Zeit 21 abgebildeten Frequenzen 22 in einem Frequenzverlauf 28. Gezeigt sind hier beispielhaft zwei Frequenzverläufe 28₁ und 28₂ von zwei verschiedenen Schaufeln 26. Erfindungsgemäß werden insbesondere die Frequenzen 22 aller Schaufeln 26 überwacht.

Die erhaltenen Frequenzen 22 werden mit bestimmten Frequenzwerten verglichen 35. Diese Frequenzwerte können beispielsweise aus den bisherigen Werten der Schaufel gewonnen werden und/oder die bestimmten Frequenzwerte sind vordefinierte Werte eines bestimmten Frequenzbereichs 25. Bei einer plötzlichen und/oder deutlichen Änderung der Frequenz 22 an einer der Schaufeln 26 wird ein Alarmereignis 23 erkannt 36 und ein Alarm ausgegeben, bzw. die Turbine 10 kontrolliert heruntergefahren. In der Figur 5 tritt in dem unteren Frequenzverlauf 28₂ ein derartiges Alarmereignis 23 auf.

Die Figur 6 zeigt beispielhaft ein erfindungsgemäßes Messverfahren 11 in einem Flussdiagramm von einem Start 30 bis zu einem Ende 37. In einem ersten Schritt werden Magnetfelder erzeugt 31. Durch die die Magnetfelder an einer bestimmten Stelle durchquerenden Spitze 15 der Schaufel 26 werden bestimmte Magnetfelder beeinflusst und die Positionswerte 19 der Spitze 15 werden erfasst 32. Aus den Positionswerten 19 bildet 33 die Auswerteeinheit den Positionsverlauf 20 und ermittelt 34 die Frequenz 22 des Positionsverlaufs 19. Die erhaltene Frequenz 22 wird anschließend mit bestimmten Frequenzwerten verglichen 35. Auf diese Weise werden alle Schaufeln 26 der Turbine 10 zyklisch nacheinander kontrolliert. Weicht die erhaltene Frequenz 22 von den bestimmten Frequenzwerten ab, wird ein Alarmereignis 23 erkannt 36. Dieses kann als Startsignal für weitere Sicherheitsmaßnahmen, wie beispielsweise eine Turbinenabschaltung, verwendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher durch die nachfolgenden Ansprüche bestimmt ist.

## Patentansprüche

1. Messverfahren (11) zur Früherkennung eines Schadens an einer Schaufel (26) eines Schaufelrads einer Turbine (10), wobei während eines Betriebs der Turbine (10)
- in einer Rotationsrichtung (17) der Schaufel (26) entlang eines das Schaufelrad umgebenden Umfangs (24) an mehreren Stellen jeweils mehrere Magnetfelder im Wesentlichen in einer Schwingungsrichtung (18) der Schaufel (26) nebeneinander erzeugt (31) werden, die von einer Spitze (15) eines Schaufelblatts (14) der Schaufel (26) beim Durchqueren beeinflusst werden, wobei in der Turbine (10) in der Rotationsrichtung (17) entlang des Umfangs (24) an mehreren Stellen Messflächen (13) angeordnet werden, wobei die Messflächen (13) mit mehreren Erregerspulen (29) und mit mehreren Reihen von nebeneinander angeordneten Sonden (12) ausgebildet werden,
- durch die Beeinflussung an den mehreren Stellen Positionswerte (19) der Spitze (15) erfasst (32) werden,
- aus den Positionswerten (19) ein Positionsverlauf (20) des Schaufelblatts (14) gebildet (33) wird,
- aus dem Positionsverlauf (20) eine Frequenz (22) ermittelt (34) wird,
- die Frequenz (22) mit bestimmten Frequenzwerten verglichen (35) wird und
- bei einer plötzlichen und/oder starken Änderung der Frequenz (22) ein Alarmereignis (23) erkannt (36) wird.

2. Messverfahren (11) nach Anspruch 1,
bei dem die Positionswerte (19) in eine Sinuskurve als Positionsverlauf überführt werden.

3. Messverfahren (11) nach Anspruch 1 oder 2,
bei dem die Schaufeln (26) zyklisch nacheinander überprüft werden.

4. Messverfahren (11) nach einem der Ansprüche 1 bis 3, bei dem die bestimmten Frequenzwerte aus den bereits ermittelten Frequenzen (22) der Schaufel (26) bestimmt werden.

5. Messverfahren (11) nach einem der Ansprüche 1 bis 4, bei dem die bestimmten Frequenzen aus einem vordefinierten Frequenzbereich (25) bestimmt werden.

6. Turbine (10) mit einem Diffusor (16) und einem im Diffusor (16) angeordneten und mehrere Schaufeln (26) aufweisenden Schaufelrad,
wobei die Turbine (10) in einer Rotationsrichtung (17) der Schaufeln (26) entlang eines das Schaufelrad umgebenden Umfangs (24) an mehreren Stellen Messflächen (13) umfasst, **dadurch gekennzeichnet, dass** mehrere die Messflächen (13) jeweils mehrere Erregerspulen (29) und mehrere im Wesentlichen in einer Schwingungsrichtung (18) der Schaufel (26) nebeneinander angeordnete Sonden (12) aufweisen, die mit einer Auswerteeinheit verbindbar sind,
wobei die Messflächen (13) jeweils mehrere Reihen von nebeneinander angeordneten Sonden (12) aufweisen.

7. Turbine (10) nach Anspruch 6,
wobei die Messflächen (13) gleichmäßig über den gesamten Umfang (24) verteilt angeordnet sind.

8. Turbine (10) nach Anspruch 6,
wobei die mehreren Reihen zueinander in einer Richtung angeordnet sind, die senkrecht zu der Schwingungsrichtung (18) der Schaufel (26) verläuft.

9. Turbine (10) nach einem der Ansprüche 6 bis 8,
wobei die Turbine (10) eine Wasserkühlung an den Messflächen (13) aufweist.

## Claims

1. Measurement method (11) for the early detection of damage to a blade (26) of an impeller of a turbine (10),
wherein
during operation of the turbine (10)
- in a rotational direction (17) of the blade (26) along a circumference (24) which surrounds the impeller, at a plurality of points, in each case a plurality of magnetic fields are generated (31) next to one another substantially in an oscillation direction (18) of the blade (26), which magnetic fields are influenced by a tip (15) of a blade leaf (14) of the blade (26) during transit, wherein, in the turbine (10), measuring areas (13) are arranged at a plurality of points along the circumference (24) in the direction of rotation (17), wherein the measuring areas (13) are formed with a plurality of exciter coils (29) and with a plurality of rows of probes (12) arranged next to one another,
- as a result of the influence at the plurality of points, positional values (19) of the tip (15) are acquired (32),
- a positional profile (20) of the blade leaf (14) is formed (33) from the positional values (19),
- a frequency (22) is determined (34) from the positional profile (20),
- the frequency (22) is compared (35) with specific frequency values and
- in the event of a sudden and/or sharp change in the frequency (22), an alarm event (23) is detected.

2. Measurement method (11) according to Claim 1,
in which the positional values (19) are transferred into a sine curve as a positional profile.

3. Measurement method (11) according to Claim 1 or 2,
in which the blades (26) are checked cyclically one after another.

4. Measurement method (11) according to one of Claims 1 to 3, in which the specific frequency values are determined from the already determined frequencies (22) of the blade (26).

5. Measurement method (11) according to one of Claims 1 to 4, in which the specific frequencies are determined from a previously defined frequency range (25).

6. Turbine (10) comprising a diffuser (16) and an impeller arranged in the diffuser (16) and having a plurality of blades (26),
wherein
the turbine (10) comprises measuring areas (13) at a plurality of points along a circumference (24) which surrounds the impeller in a direction of rotation (17) of the blades (26),
**characterized in that** the measuring areas (13) each have a plurality of exciter coils (29) and a plurality of probes (12) which are arranged next to one another substantially in an oscillation direction (18) of the blades (26) and which can be connected to an evaluation unit,
wherein the measuring areas (13) each have a plurality of rows of probes (12) arranged next to one another.

7. Turbine (10) according to Claim 6,
wherein the measuring areas (13) are arranged distributed uniformly over the entire circumference (24).

8. Turbine (10) according to Claim 6,
wherein the plurality of rows are arranged in relation to one another in a direction which extends at right angles to the oscillation direction (18) of the blade (26).

9. Turbine (10) according to one of Claims 6 to 8,
wherein the turbine (14) has water cooling on the measuring areas (13).

## Revendications

1. Procédé (11) de mesure pour la détection précoce d'un dommage sur une aube (26) d'une roue à aube d'une turbine (10), dans lequel
pendant que la turbine (10) fonctionne
- dans un sens (17) de rotation de l'aube (26) le long d'un pourtour (24) entourant la roue à aube, on crée en plusieurs points respectivement plusieurs champs magnétiques les uns à côté des autres sensiblement dans une direction (18) de vibration de l'aube (26), qui sont influencés à la traversée par une pointe (15) d'une lame (14) de l'aube (26), des surfaces (13) de mesure étant disposées en plusieurs points dans la turbine (10) dans le sens (17) de rotation le long du pourtour (24), les surfaces (13) de mesure étant constituées de plusieurs bobines (29) excitatrices et de plusieurs rangées de sondes (12) disposées les uns à côté des autres,
- par l'influence sur les plusieurs points, on relève (32) des valeurs (19) de position de la pointe (15),
- à partir des valeurs (19) de position, on forme (33) un tracé (20) de position de la lame (14) de l'aube,
- à partir du tracé (20) de position, on détermine (34) une fréquence (22),
- on compare (35) la fréquence (22) à des valeurs de fréquence définies et
- s'il se produit une variation soudaine et/ou forte de la fréquence (22), on détecte (36) un événement (23) d'alerte.

2. Procédé (11) de mesure suivant la revendication 1,
dans lequel on transforme, comme tracé de position, les valeurs (19) de position en une courbe sinus.

3. Procédé (11) de mesure suivant la revendication 1 ou 2, dans lequel on contrôle cycliquement les aubes (26) les unes après les autres.

4. Procédé (11) de mesure suivant l'une des revendications 1 à 3,
dans lequel on détermine les valeurs de fréquence définies à partir des fréquences (22) déjà déterminées de l'aube (26).

5. Procédé (11) de mesure suivant l'une des revendications 1 à 4,
dans lequel on définit les fréquences définies à partir d'une plage (25) de fréquence définie à l'avance.

6. Turbine (10) ayant un diffuseur (7) et une roue d'aube disposée dans le diffuseur (26) et comportant plusieurs aubes (26),
dans laquelle
la turbine (10) comprend des surfaces (13) de mesure en plusieurs points dans un sens (17) de rotation des aubes (26) le long d'un pourtour entourant la roue d'aube, caractérisée ce que
les surfaces (13) de mesure ont respectivement plusieurs bobines (29) excitatrices et plusieurs sondes (12) disposées les unes à côté des autres sensiblement dans une direction (18) de vibration de l'aube (26), sondes qui peuvent être reliées à une unité d'exploitation,
dans laquelle les surfaces (13) de mesure ont respectivement plusieurs rangées de sondes (12) disposées les unes à côté des autres.

7. Turbine (10) suivant la revendication 6,
dans laquelle les surfaces (13) de mesure sont réparties uniformément sur tout le pourtour (24).

8. Turbine (10) suivant la revendication 6,
dans laquelle les plusieurs rangées sont disposées les unes par rapport aux autres dans une direction, qui s'étend perpendiculairement à la direction (18) de vibrations des aubes (26).

9. Turbine (10) suivant l'une des revendications 6 à 8,
dans laquelle la turbine (10) a un refroidissement par de l'eau sur les surfaces (13) de mesure.
